# EUROPÄISCHE PATENTSCHRIFT

(11) **EP 0 808 494 B1**
(45) Veröffentlichungstag und Bekanntmachung des Hinweises auf die Patenterteilung: **16.12.1998**
(21) Anmeldenummer: 96900831.7
(22) Anmeldetag: 07.02.1996
(51) Int. Cl.: G09B 29/10

(54) **VERFAHREN ZUM AUTOMATISCHEN VERBREITEN VON AKTUELLEN TRANSPORTSYSTEM-BETRIEBSDATEN**
PROCESS FOR THE AUTOMATED DISSEMINATION OF CURRENT OPERATIONAL DATA FROM A TRANSPORT FACILITY
PROCEDE DE DIFFUSION AUTOMATIQUE DE DONNEES INSTANTANEES SUR LE FONCTIONNEMENT DE SYSTEMES DE TRANSPORT

(30) Priorität: 10.02.1995 CH 392/95; 28.12.1995 CH 3692/95
(43) Veröffentlichungstag der Anmeldung: 26.11.1997
(73) Patentinhaber: Balmer, Walter, 6043 Adligenswil (CH)
(72) Erfinder: Balmer, Walter, 6043 Adligenswil (CH)
(74) Vertreter: Roshardt, Werner Alfred, Dipl.-Phys.
(86) Internationale Anmeldenummer: CH9600048
(87) Internationale Veröffentlichungsnummer: WO9624919

(56) Entgegenhaltungen:
- DE-A- 3 918 668
- FR-A- 2 397 033
- FR-A- 2 435 768
- GB-A- 2 195 868
- RADIO FERNSEHEN ELEKTRONIK, Bd. 41, Nr. 12, 1.Dezember 1992 Seiten 803-806, XP 000368020 SIEGLE G 'VERKEHRSFUNK DIGITAL: TRAFFIC MESSAGE CHANNEL'
- PATENT ABSTRACTS OF JAPAN vol. 013 no. 093 (P-838) ,6.März 1989 & JP,A,63 276199 (MASARU NAGAI) 14.November 1988,

## Beschreibung

### Stand der Technik

Der Ferienurlaub in Berggebieten ist - insbesondere im Winter - sehr beliebt. Entsprechend ist das Angebot an Bergbahnen, Skiliften, Sesselbahnen u. dgl. ständig gewachsen. Die Anzahl der Bahnen und Pisten ist in den bekannten Skigebieten so gross, dass der Feriengast innerhalb eines Tages nur Teilgebiete befahren kann. Um ihm einen Eindruck von der Vielseitigkeit und den Schwierigkeitsgraden der Pisten zu geben, werden Karten (in Vogelperspektive) gedruckt, in welchen Pisten, Wanderwege und Bahnen möglichst naturgetreu eingezeichnet sind.

Aufgrund der variierenden Wetter- und Schneeverhältnisse können jedoch oft nicht alle in den Karten eingezeichneten Pisten und Bahnen benutzt werden. Der Feriengast muss sich deshalb darüber informieren, welche Bahnen gerade in Betrieb sind und welche nicht. Es ist bekannt, dass diese Informationen telefonisch bei den Bahnbetreibern oder dem Verkehrsverein erfragt werden können. Ebenso werden in der Früh im lokalen Radio Schnee- und Bahnbetriebssituation erläutert. Die Nachrichtensendung hat zwar den Vorteil, dass der Gast gleich während des Frühstücks nebenbei informiert werden kann. Allerdings werden die entsprechenden Bulletins nur zu bestimmten Zeitpunkten verlesen, d. h. sie stehen nicht jederzeit ohne weiteres zur Verfügung. Das Nachfragen bei den Bahnbetrieben oder an der Hotelreception ist oft etwas mühsam und mit der Unsicherheit behaftet, dass die auskunftgebende Person nicht auf dem aktuellen Stand ist. Nebst dem stehen dem Benützer an den Talstationen teilweise Informationswände mit verbal umschriebenen Leuchtanzeigen zur Verfügung.

Die Druckschrift FR 2.397.033 offenbart ein gattungsgemässes fernsteuerbares Anzeigesystem für Bergbahnen. Die Bergbahnen sind durch Lämpchenreihen dargestellt und können entsprechend dem Betriebszustand der Bergbahn als Lauflicht angesteuert werden. Die Ansteuerung der Anzeige erfolgt von einem Steuerpult aus. Die Betriebszustände werden vom Personal telefonisch abgefragt bzw. entgegengenommen. Die Anzeigetafel wird manuell eingestellt.

### Darstellung der Erfindung

Aufgabe der Erfindung ist es, ein Verfahren zum Verbreiten von aktuellen Betriebszuständen von Transportbahnen in Berggebieten anzugeben, durch welches die Betriebszustände der Bergbahnen den Touristen jederzeit nbequem und aktuell zugänglich sind.

Im Rahmen der Erfindung kann die gewünschte Information somit jederzeit durch Einschalten des Fernsehgerätes in aktueller und visuell aufbereiteter Form beschafft werden. Das Fernsehsignal wird z. B. über einen speziell dafür vorgesehenen Sendekanal übertragen oder als Programmfenster periodisch in einem Fernsehprogramm eingeblendet. Ein Knopfdruck bringt also alles Wissenswerte zum Teilnehmer (ins Hotelzimmer, in die Wohnstube etc.).

TSB-Daten sind im Rahmen der Erfindung sehr weit definiert. Neben dem Bahnbetriebszustand (in Betrieb/ausser Betrieb) kann auch die Anzeige von Lawinengefahr oder die Benutzerfrequenz (Auslastung) von Interesse sein. Der Begriff umfasst auch den Zustand einer Abfahrtspiste (offen/geschlossen, Schneequalität). Aehnliche Informationen können für einen Sommerkurort zusammengetragen werden z. B. in bezug auf Wanderwege, Sessellifte etc. Die Erfindung lässt sich im Prinzip auch für Eisenbahnnetze bzw. Verkehrsbetriebe im ganzen Land bzw. in den Städten anwenden. Denkbar ist auch, dass ein Strasseninformationsdienst auf dieser Basis aufgebaut wird. Vor einer längeren Geschäftsfahrt oder einer Fahrt in die Ferien kann der Fahrzeuglenker sich über die aktuelle Situation informieren und eine geeignete Route ausfindig machen. Neben dem wetterbedingten Zustand einer Strasse könnte auch deren Auslastung bzw. Ueberlastung (Verkehrsstau) angezeigt werden. Im Unterschied zu den bekannten Informationssystemen, bei welchen z. B. eine Staumeldung zum Zeitpunkt des Auftretens über einen Hörfunkkanal verbreitet wird, ist der Fahrzeuglenker bei der Erfindung nicht darauf angewiesen, seinen Empfänger bei der Ausstrahlung der Mitteilung eingeschaltet zu haben. Er kann jederzeit auf die gewünschte Information zugreifen.

Vorzugsweise werden die TSB-Daten entsprechend den realen Gegebenheiten in einem entsprechend gewählten Bild (Karte in der Vogelperspektive o. dgl.) kartographisch und bildlich codiert dargestellt. Die Information wird also nicht textlich zur Anzeige gebracht. Vielmehr leuchtet z. B. eine den Verlauf der Bahn anzeigende Linie z. B. farbig auf (z. B. rot = geschlossen, grün = offen). Anstelle einer Farbcodierung kann auch eine Liniencodierung gewählt werden (z. B. durchgezogene Linie = offen, gestrichelte Linie = geschlossen). In ähnlich sinnfälliger Weise kann auch der Zustand der Pisten (Skipisten, Langlaufloipen, Schlittel- und Wanderwege) angezeigt werden. Es wird natürlich darauf zu achten sein, dass das Bild durch die eingeblendeten Daten nicht überlastet erscheint, sondern jederzeit leicht lesbar und interpretierbar ist. Ist das Gebiet zu gross, so dass die einzelnen Transportsysteme zu eng beieinander sind, so kann eine Gesamtkarte in mehrere Teilkarten aufgetrennt werden, die nacheinander als Standbildsequenz ausgestrahlt werden. Die TSB-Daten können auch tabellarisch zur Anzeige gebracht werden. Das Bild (in welchem die TSB-Daten eingeblendet werden) kann also eine Tabelle sein. Die Tabelle kann z. B. vor einem bildlichen Hintergrund (Karte, bewegtes Bild, Schneeberge) dargestellt sein.

Vorzugsweise werden die TSB-Daten in digitaler Form (z. B. mit einem Modem) über eine Telefonleitung zur Informationszentrale übertragen. D. h. es wird das bereits bestehende Telefonnetz genutzt. Anstelle des Telefonnetzes können auch lokale Kommunikationsnetzwerke (z. B. ein Breitbandkommunikationssystem), eine Funksignalübertragung oder eine separate Verkabelung verwendet werden. Die TSB-Daten können auch manuell dem Rechner zugeführt werden (telefonische Uebermittlung und Eingabe via Tastatur).

Der Betriebszustand steht in der Regel in der Steuerzentrale oder an einer Informationstafel der jeweiligen Bahn zur Verfügung. Ein Signal kann also z. B. von der Steuerzentrale bzw. Informationstafel abgezweigt und mit einem Modem via Telefonleitung an die Informationszentrale übertragen werden. Bei kleinen, technisch einfachen Schleppliften kann die Stellung des Hauptschalters für den Antrieb abgegriffen und übertragen werden. Vielerorts sind die Anlagen auch systematisch mit einer Sicherheitsschaltung ausgestattet, die bei starkem Wind den Antrieb ausschaltet und die ebenfalls zur Datenerfassung ergänzt werden kann. Die Auslastung kann im Prinzip vom Leistungsbedarf des Antriebsmotors (bei stationär angetriebenen Anlagen wie z. B. Schleppliften) abgeleitet werden. Denkbar ist aber auch, dass das Betriebspersonal die jeweilige Auslastung bzw. Benutzerfrequenz eingibt.

Eine Anlage zur Durchführung des erfindungsgemässen verfahrens umfasst ein Breitbandkommunikationsnetz (z. B. Koaxialkabel- oder Lichtwellenleiternetz) mit einer Kopfstation zur Ausstrahlung bzw. Einspeisung von Fernsehsignalen. Eine Schaltung (z. B. ein Modem, ein Breitbandkommunikationsempfänger oder ein Funksignalempfänger) erfasst bzw. empfängt die TSB-Daten. Eine Datenverarbeitungseinheit blendet die aktuellen Daten z. B. in ein statisches, abgespeichertes kartographisches Bild ein. Mit einer Senderschaltung (Modulator) wird schliesslich ein entsprechendes Hochfrequenz-Fernsehsignal in das Breitbandkommunikationsnetz eingekoppelt. In der Regel werden in der Informationszentrale auch in bekannter Weise Fernsehkanäle (z. B. ab Antenne) empfangen und eingespeist.

Vorteilhafterweise ist das Breitbandkommunikationsnetz, welches zur Ausstrahlung der Fernsehsignale dient, gleichzeitig das Medium zum Uebertragen der TSB-Daten von den dezentralen Transportsystemen zur Informationsverarbeitungszentrale.

Weitere vorteilhafte Ausführungsformen und Merkmalskombinationen ergeben sich aus der anschliessenden Detailbeschreibung und der Gesamtheit der Patentansprüche.

### Kurze Beschreibung der Zeichnungen

Nachfolgend soll die Erfindung anhand von Ausführungsbeispielen und im Zusammenhang mit den Zeichnungen näher erläutert werden. Es zeigen:
- Fig. 1: Eine schematische Darstellung einer erfindungsgemässen Anlage;
- Fig. 2: ein Beispiel für ein erfindungsgemäss erzeugtes Fernsehbild.

### Wege zur Ausführung der Erfindung

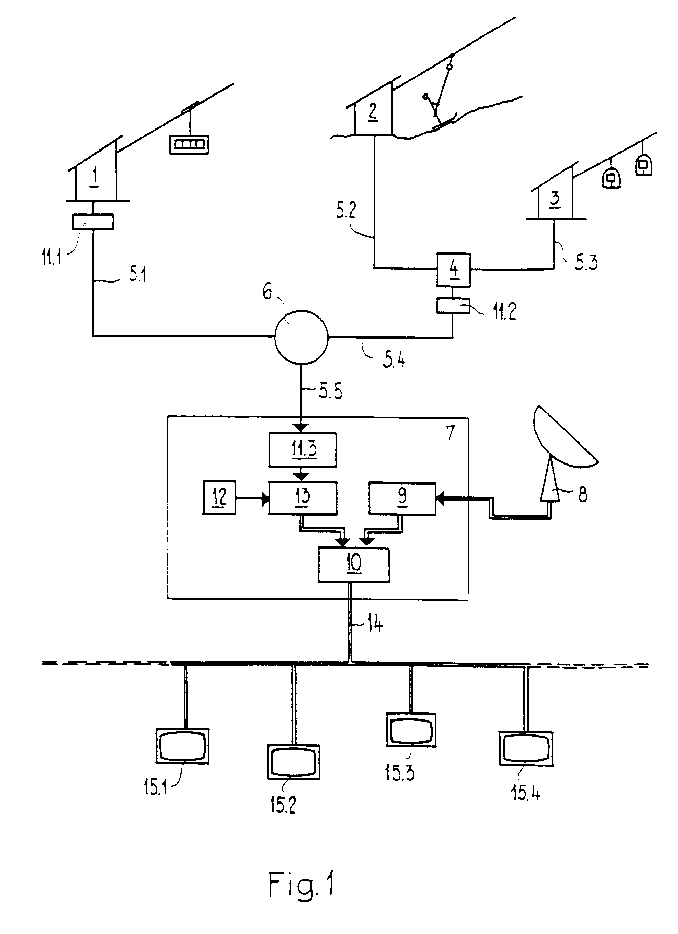

In Fig. 1 sind schematisch eine Seilbahn 1 (Grossraumschwebebahn), ein Schlepplift 2 (Skilift) und eine Gondelbahn 3 (Kleinkabinenbahn) dargestellt. Sie stehen symbolisch für eine Vielzahl von im Skigebiet verteilten Bergbahnen bzw. Transportanlagen. Der Schlepplift 2 und die Gondelbahn 3 sind z. B. über betriebseigene Leitungen 5.2, 5.3 direkt mit einer lokalen Zentrale 4 (z. B. in der Talstation einer die beiden genannten Bahnen erschliessenden Zahnradbahn) verbunden. Die Seilbahn 1 und die lokale Zentrale 4 sind über Modems 11.1, 11.2 und Leitungen 5.1, 5.4 an das öffentliche Telefonnetz angeschlossen, welches durch eine Telefonvermittlungszentrale 6 versinnbildlicht ist.

Ebenfalls am öffentlichen Telefonnetz angeschlossen ist eine Kopfstation 7 eines Kabelnetzes 14 (Leitung 5.5). Die Kopfstation 7 empfängt in an sich bekannter Weise z. B. über eine Empfangsantenne 8 eine Vielzahl von Fernsehkanälen. Diese werden mit einer an sich bekannten Konverterschaltung 9 und einer Senderschaltung 10 (beide nur vereinfacht und symbolisch dargestellt) in das Kabelnetz 14 eingespeist.

Gemäss der Erfindung weist nun die Kopfstation 7 ein Modem 11.3, einen (digitalen) Speicher 12 und einen Rechner 13 auf. Mit dem Modem 11.3 können die Betriebszustände der Seilbahn 1 bzw. des Schlepplifts 2 und der Gondelbahn 3 empfangen bzw. abgefragt werden. Der Rechner 13 ermittelt aus den übertragenen Daten, welche der vorhandenen Bahnen laufen und welche ausser Betrieb sind. Entsprechend wird (softwaremässig) eine Art Matrize generiert, welche einem im Speicher 12 vorhandenen statischen Bild überlagert werden kann. Das derart aktualisierte Bild wird in einen (nicht dargestellten) Zwischenspeicher übergeben, damit auf dessen Basis ein fortdauerndes Fernsehsignal, enthaltend ein stehendes Videobild, erzeugt werden kann. Das Fernsehsignal wird über die Senderschaltung 10 (als eigenständiger Fernsehkanal) in das Kabelnetz 14 eingespeist.

An jedem Fernsehgerät 15.1, ..., 15.4, welches am Kabelnetz 14 angeschlossen ist, kann das Standbild zur Anzeige gebracht werden. Da das Fernsehsignal fortdauernd erzeugt und ausgestrahlt wird, steht die auf diese Weise übermittelte Information jederzeit zur Verfügung.

Das erfindungsgemässe Fernsehsignal kann auch periodisch in einem Programmfenster eines Informationssenders o. dgl. eingeblendet werden. Die Information steht dann zwar nicht jederzeit aber zumindest in regelmässigen Zeitabständen resp. zu bestimmten Zeitpunkten (z. B. zusammen mit Wetterinformationen, Werbeblöcken etc.) zur Verfügung.

Nach jeder Aenderung eines Betriebszustandes werden die neuen Daten ab Steuerzentrale 4 oder ab einer automatischen Informationsanzeigewand automatisch an die Informationszentrale (hier Kopfstation 7) übermittelt. Dadurch wird gewährleistet, dass die aufbereiteten und übertragenen Daten immer aktuell sind. Der letzte Zeitpunkt der Aktualisierung kann im Fernsehbild eingeblendet werden.

Von der Kopfstation 7 aus können die Betriebszustände oder sonstige Informationen (welche ev. zusätzlich zur Anzeige gebracht werden) zu einem beliebigen Zeitpunkt automatisch abgefragt werden. Aendert eine Bahn ihren Betriebszustand, so kann dies der Kopfstation 7 automatisch signalisiert werden. Durch wiederholtes resp. periodisches Abfragen der Bahnzustände und/oder durch ereignisgesteuerte Signalisierung von den Bahnstationen zur Kopfstation 7 werden die Betriebszustandsdaten stets auf dem aktuellen Stand gehalten.

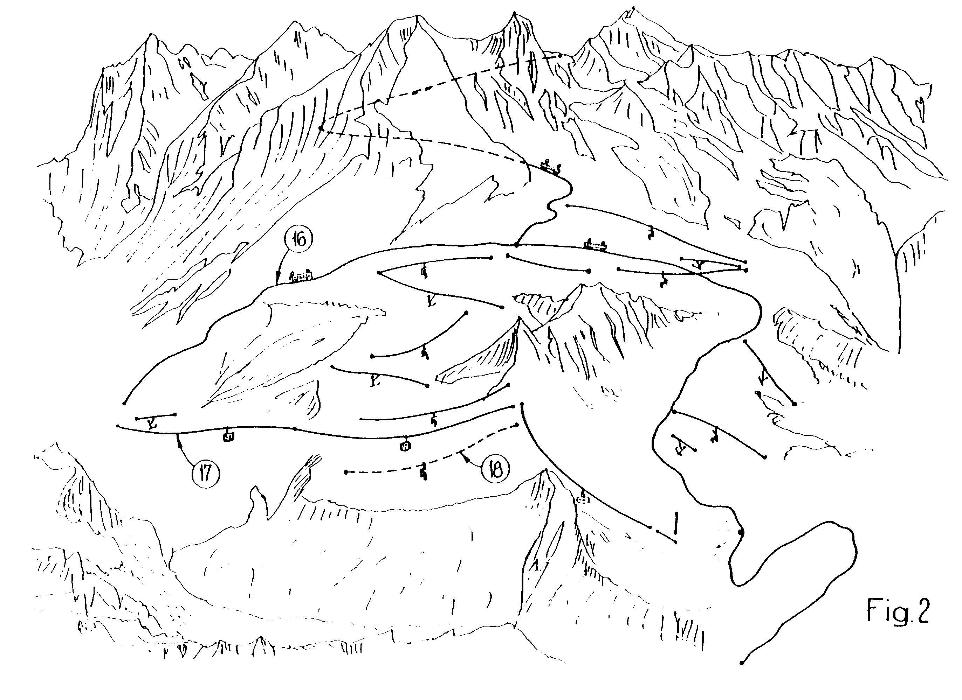

Fig. 2 zeigt beispielhaft, wie die Betriebszustandsdaten auf dem Fernsehbildschirm zur Anzeige gebracht werden können. Die Gebirgs-Landschaft wird aus der Vogelperspektive (landkartenähnlich) dargestellt. Mit Linien z. B. 16, 17, 18 und Symbolen sind die Bahnen und Transportanlagen entsprechend ihrem tatsächlichen Verlauf eingezeichnet. Diejenigen Bahnen (16, 17), die in Betrieb sind, sind z. B. mit grüner Farbe markiert. Anstelle einer Farbcodierung kann z. B. auch eine Liniencodierung (gestrichelte, punktierte, durchgezogene Linie) gewählt werden (vgl. z. B. gestrichelte Linie 18 = Bahn ausser Betrieb). Die Linien von in Betrieb befindlichen Bahnen können z. B. auch blinken oder als sich fortbewegende gestrichelte Linien gezeigt werden. Auf diese Weise ziehen sie die Aufmerksamkeit des Betrachters auf sich.

Schaltet der Feriengast z. B. in Interlaken das Fernsehgerät in seinem Hotelzimmer ein, dann hat er einen Ueberblick über das ganze Skigebiet. Er kann entscheiden, ob es lohnend ist, auf den Männlichen zu fahren oder ob er besser auf die Kleine Scheidegg gehen soll. Die gleiche Information kann ohne besonderen zusätzlichen Aufwand einem nahezu beliebig grossen Benutzerkreis zugänglich gemacht werden. Will jemand (aus einer entfernter gelegenen Stadt) nur für einen einzigen Tag in die Berge fahren, kann er von zuhause aus feststellen, wie der Zustand des Skigebiets ist.

Ist (wie im Beispiel der Jungfrau-Region) das Skigebiet sehr gross, so ist es empfehlenswert, die Information in mehreren Teilbildern als Sequenz zu übertragen. Zur Auflockerung bzw. um die Wettersituation zu veranschaulichen, können an ausgewählten Standorten des Skigebiets automatisch schwenkbare Fernsehkameras aufgestellt werden, deren Videosignal zur Kopfstation übertragen und dort abwechselnd zu den erfindungsgemässen Bildern in das Kabelnetz 14 eingespeist werden. Die TSB-Daten können auch tabellarisch vor einem bewegten Hintergrundbild zur Anzeige gebracht werden.

Wie bereits erwähnt, können die Bahnen (1, 2, 3) bzw. die lokale Zentrale 4 auch an das Kabelnetz 14 angeschlossen sein. D. h. anstelle der Telefonleitungen 5.1, 5.4, 5.5 tritt das Breitbandkommunikationsnetz 14 (Uebertragung in Rückwärtsrichtung).

Zusammenfassend ist festzuhalten, dass durch die Erfindung ein Informationssystem geschaffen worden ist, das sich durch einen einfachen Zugriff und eine jedermann verständliche Datenaufbereitung auszeichnet.

## Patentansprüche

1. Verfahren zum Verbreiten von aktuellen Betriebszuständen von Transportbahnen in Berggebieten, wobei die genannten Betriebszustände erfasst und entsprechend den zugrunde liegenden realen Gegebenheiten in einem als Karte ausgebildeten Bild kartografisch und bildlich codiert dargestellt werden, dadurch gekennzeichnet, dass die Betriebszustände von den Transportbahnen automatisch und echtzeitmässig zu einer Informationszentrale übertragen werden, dass sie dort in das elektronische Bild eingeblendet werden und dass das derart ständig aktuell gehaltene Bild als Fernsehsignal ausgestrahlt bzw. verbreitet wird.

2. Verfahren nach Anspruch 1, dadurch gekennzeichnet, dass die TSB-Daten entsprechend den zugrunde liegenden realen Gegebenheiten in dem als Karte ausgebildeten Bild kartographisch und bildlich codiert dargestellt werden.

3. Verfahren nach Anspruch 2, dadurch gekennzeichnet, dass die TSB-Daten durch Farben codiert werden.

4. Verfahren nach einem der Ansprüche 1 bis 3, dadurch gekennzeichnet, dass als TSB-Daten Betriebszustände von zum Transportsystem gehörenden Bahnen (1, 2, 3), insbesondere Bergbahnen, Seilbahnen und/oder Schleppliften, verwendet werden.

5. Verfahren nach einem der Ansprüche 1 bis 4, dadurch gekennzeichnet, dass eine Mehrzahl von aktuell gehaltenen Bildern als Standbildsequenz ausgestrahlt wird.

6. Verfahren nach einem der Ansprüche 1 bis 5, dadurch gekennzeichnet, dass die TSB-Daten in digitaler Form über mindestens eine Telefonleitung (5.1, ..., 5.5), eine Funkverbindung oder ein Breitbandkommunikationsnetz, von zum Transportsystem gehörenden Transportanlagen (1, 2, 3) zu einer Kopfstation (7) übertragen werden.

7. Anlage zum Verbreiten von aktuellen Betriebszuständen von Transportbahnen in Berggebieten, wobei die Anlage eine Erfassungsanordnung hat, die die genannten Betriebszustände erfasst, und eine Anzeige hat, die entsprechend den zugrundeliegenden realen Gegebenheiten in einem als Karte ausgebildeten Bild kartografisch und bildlich codiert darstellt, dadurch gekennzeichnet, dass
a) die Erfassungsanordnung aus einer Schaltung (11.3) besteht, die die Betriebszustände automatisch und in Echtzeit empfängt, und dass
b) die Anlage eine Datenverarbeitungseinheit (12, 13), die die aktuellen Betriebszustände in ein elektronisches Bild in Form einer kartografisch und bildlich codierten Darstellung einblendet,
c) ein Breitbandkommunikationsnetz (14) mit einer Kopfstation (7) zur Ausstrahlung von Fernsehsignalen, und
d) eine Senderschaltung (10), die ein dem Bild entsprechendes Fernsehsignal über das Breitbandkommunikationsnetz (14) ausstrahlt bzw. überträgt, umfasst.

8. Anlage nach Anspruch 7, dadurch gekennzeichnet, dass die Schaltung (11.3) der Erfassungsanordnung ein an einer Telefonleitung (5.5) oder am genannten Breitbandkommunikationsnetz (14) angeschlossenes Modem (11.3) ist.

9. Anlage nach einem der Ansprüche 7 oder 8, dadurch gekennzeichnet, dass das Breitbandkommunikationsnetz (14) ein Kabelnetz ist.

10. Anlage nach einem der Ansprüche 8 oder 9, dadurch gekennzeichnet, dass die Schaltung (11.3) der Erfassungsanordnung ein am Breitbandkommunikationsnetz (14) angeschlossener Breitbandsignalempfänger ist.

## Claims

1. Method of disseminating current operational conditions of transport facilities in mountainous regions, in which the said operational conditions are acquired and shown in a cartographically and graphically coded manner, in accordance with the actual underlying conditions, in an image formed as a map, characterized in that the operational conditions of the transport facilities are transferred automatically and in real time to an information centre, in that they are superimposed on the electronic image therein, and in that the image thus continuously kept up-to-date is transmitted or disseminated as a television signal.

2. Method according to Claim 1, characterized in that the TSB-data corresponding to the actual underlying conditions are shown in a cartographically and graphically coded manner in the image formed as a map.

3. Method according to Claim 2, characterized in that the TSB data are colour-coded.

4. Method according to any one of Claims 1 to 3, characterized in that operational conditions of facilities (1, 2, 3) belonging to the transport system, particularly mountain railways, cable cars and/or drag lifts, are used as TSB data.

5. Method according to any one of Claims 1 to 4, characterized in that a plurality of images which are kept up-to-date, is transmitted as a sequence of still images.

6. Method according to any one of Claims 1 to 5, characterized in that the TSB-data are transferred in digital form by means of at least one telephone line (5.1, ..., 5.5), one radio link, or one broad-band communication network from transport facilities (1, 2, 3) belonging to the transport system to an end station (7).

7. System for disseminating current operational conditions of transport facilities in mountainous regions, in which the system has an acquisition unit which acquires the said operational conditions and has a display which provides a representation in a cartographically and graphically coded manner, in accordance with the actual underlying conditions, in an image formed as a map, characterized in that
a) the acquisition unit comprises a circuit (11.3) which receives the operational conditions automatically and in real time, and in that
b) the system includes a data-processing unit (12, 13) which superimposes the current operational conditions, in the form of a cartographically and graphically coded representation, on an electronic image,
c) a broad-band communication network (14) with an end station (7) for transmitting television signals, and
d) a transmitter circuit (10) which transmits or transfers the television signal corresponding to the image by means of the broad-band communication network (14).

8. System according to Claim 7, characterized in that the circuit (11.3) of the acquisition unit is a modem (11.3) connected to a telephone line (5.5) or to the said broad-band communication network (14).

9. System according to any one of Claims 7 and 8, characterized in that the broad-band communication network (14) is a cable network.

10. System according to any one of Claims 8 and 9, characterized in that the circuit (11.3) of the acquisition unit is a broad-band signal receiver connected to the broad-band communication network (14).

## Revendications

1. Procédé pour la diffusion d'états d'exploitation instantanés de voies de transport dans les régions montagneuses, les états d'exploitation cités étant saisis et en fonction des particularités réelles représentées de façon codée graphiquement et iconographiquement sous forme de cartes, caractérisé en ce que les états d'exploitation des voies de transport scnt transmis automatiquement et en temps réel à une centrale d'informations afin d'y être surimpiessionnés dans l'image électronique et afin que l'image actualisée de façon constante soit émise ou diffusée en tant que signal Télévisé.

2. Procédé selon la revendication 1, caractérisé en ce que les données du système de transport sont représentées en fonction des particularités réelles de façon codée cartographiquement et iconographiquement sous forme de cartes.

3. Procédé selcn la revendication 2, caractérisé en ce que les données du système de transport sont codées au moyen de couleurs.

4. Procédé selon l'une des revendications 1 à 3, caractérisé en ce que font partie des données du système de transport les états d'exploitation des voies appartenant au système de transport (1, 2, 3), en particulier les funiculaires, les téléphériques et/ou les remonte-pentes ou téléskis.

5. Procédé selon l'une des revendications 1 à 4, caractérisé en ce qu'une pluralité d'images actualisées sont émises sous la forme de séquence d'images immobiles.

6. Procédé selon l'une des revendications 1 à 5, caractérisé en ce que les données du système de transport sont transmises sous la forme numérique par le canal d'au moins une ligne téléphonique (5.1, ..., 5.5), une liaison radio ou un réseau de communications à large bande, à partir des installations faisant partie du système de transport (1, 2, 3) jusqu'à une station de tête (7).

7. Installation pour la diffusion d'états d'exploitation instantanés de voies de transport dans les régions montagneuses, l'installation comportant un dispositif de saisie qui saisit les états d'exploitation cités et possède un affichage qui représente les états d'exploitation de façon codée en fonction des conditions réelles à faire entrer en ligne de compte, dans une image conçue sous forme de carte, caractérisée en ce que
a) le système de saisie consiste en un circuit (11.3) qui reçoit automatiquement et en temps réel les états d'exploitation, et en ce que
b) l'installation comporte une unité de traitement de données (12, 13) qui surimpressionne les états d'exploitation instantanés en une image électronique sous forme d'une représentation codée cartographiquement et iconographiquement,
c) un réseau de communications à bande large (14) avec une station de tête (7) pour l'émission de signaux télé-optiques, et
d) un circuit d'émetteur (10) qui émet ou transmet un signal télé-optique correspondant à l'image sur le réseau de communications à bande large (14).

8. Installation selon la revendication 7, caractérisée en ce que le circuit (11.3) du système de saisie est constitué par un modem (11.3) raccordé à une ligne téléphonique (5.5) ou à un réseau de communications à bande large (14).

9. Installation selon l'une des revendications 7 ou 8, caractérisée en ce que le réseau de communications à bande large (14) est un réseau câblé.

10. Installation selon l'une des revendications 8 ou 9, caractérisée en ce que le circuit (11.3) du dispositif de saisie est un récepteur de signaux large bande raccordé à un réseau de communications large bande (14).
